# EUROPEAN PATENT APPLICATION

(11) **EP 2 787 760 A1**
(43) Date of publication of application: **08.10.2014**
(21) Application number: 14163164.8
(22) Date of filing: 02.04.2014
(51) Int. Cl.: H04W 24/10

(54) **Method and apparatus for improving small cell measurement in a wireless communication system**

(30) Priority: 03.04.2013 US 201361807934 P
(71) Applicant: Innovative Sonic Corporation, Taipei City 10049 (TW)
(72) Inventor: Lin, Ko-Chiang, 10049 Zhongzheng Dist., Taipei City (TW)
(74) Representative: Hoefer & Partner

(57) **Abstract**

A method and apparatus are disclosed for improving small cell measurement in a wireless communication system. The method includes configuring a plurality of offset values for Radio Resource Management (RRM) measurement on a small cell (605). The method also includes selecting some of the plurality of offset values to determine a triggering of the measurement report of the small cell (610).

## Description

### CROSS-REFERENCE TO RELATED APPLICATIONS

The present Application claims the benefit of U.S. Provisional Patent Application Serial No. 61/807,934 filed on April 3, 2013, the entire disclosure of which is incorporated herein by reference.

### FIELD

This disclosure generally relates to wireless communication networks, and more particularly, to a method and apparatus for improving small cell measurement in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

A method and apparatus are disclosed for improving small cell measurement in a wireless communication system and are defined in independent claims 1, 8, 14 and 15, respectively. The respective dependent claims define preferred embodiments thereof, respectively. The method according to a first aspect includes configuring a plurality of offset values for Radio Resource Management (RRM) measurement on a small cell. This method also includes selecting some of the plurality of offset values to determine a triggering of the measurement report of the small cell.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 illustrates a flow chart according to one exemplary embodiment.
FIG. 6 illustrates a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. RP-122032, "New Study Item Proposal for Small Cell Enhancements for E-UTRA and E-UTRAN - Physical-layer Aspects", Huawei, HiSilicon, CATR; and TS 36.331 V11.3.0, "E-UTRA RRC protocol specification". The standards and documents listed above are hereby expressly incorporated herein.

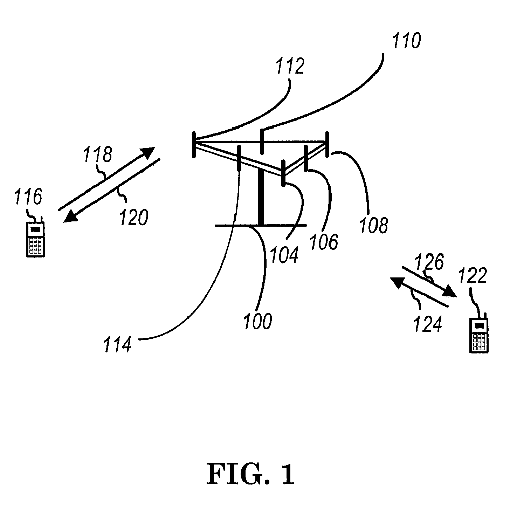

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

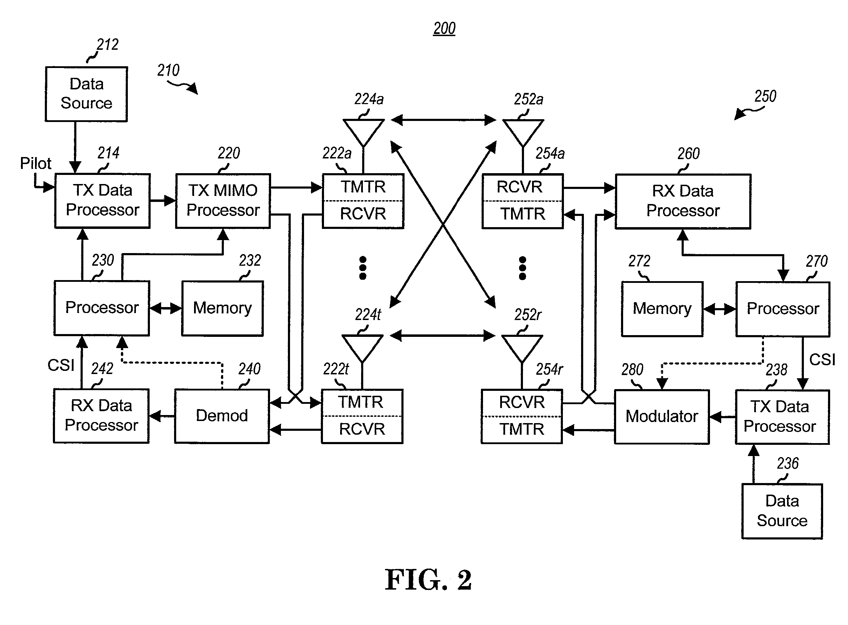

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

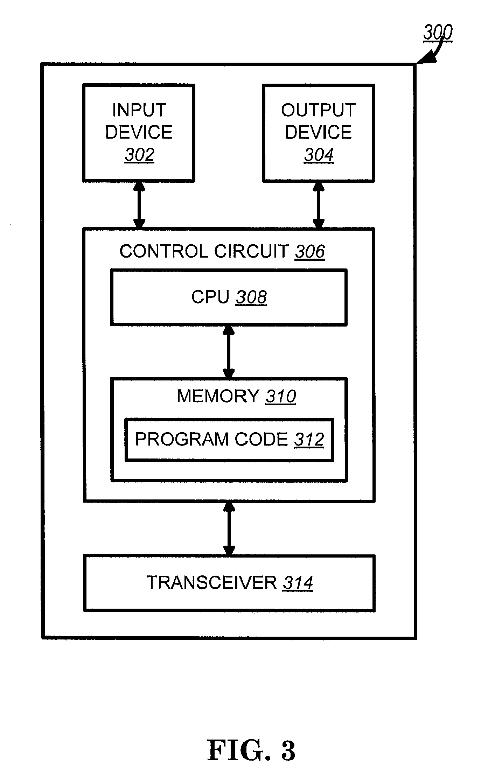

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

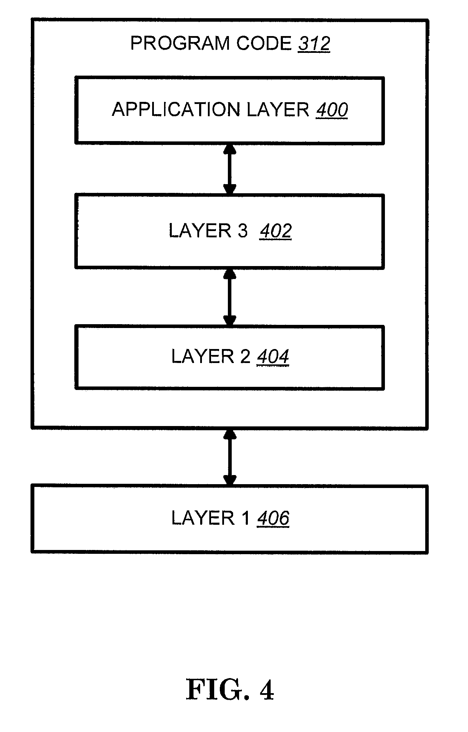

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

Small cell has been studied to provide better spectrum efficiency. 3GPP RP-122032 states:
The study shall focus on the following areas:
   - Define the channel characteristics of the small cell deployments and the UE mobility scenarios identified in TR36.932, as well as the corresponding evaluation methodology and metrics.
   - Study potential enhancements to improve the spectrum efficiency, i.e. achievable user throughput in typical coverage situations and with typical terminal configurations, for small cell deployments, including
      ○ Introduction of a higher order modulation scheme (e.g. 256 QAM) for the downlink.
      ○ Enhancements and overhead reduction for UE-specific reference signals and control signaling to better match the scheduling and feedback in time and/or frequency to the channel characteristics of small cells with low UE mobility, in downlink and uplink based on existing channels and signals.
   - Study the mechanisms to ensure efficient operation of a small cell layer composed of small cell clusters. This includes
      o Mechanisms for interference avoidance and coordination among small cells adapting to varying traffic and the need for enhanced interference measurements, focusing on multi-carrier deployments in the small cell layer and dynamic on/off switching of small cells.
      ○ Mechanisms for efficient discovery of small cells and their configuration.

Physical layer study and evaluation for small cell enhancement higher-layer aspects, in particular concerning the benefits of mobility enhancements and dual connectivity to macro and small cell layers and for which scenarios such enhancements are feasible and beneficial.

To properly control the radio resource measurement, eNB could configure proper measurement configuration for a UE, as discussed in 3GPP TS 36.331 V11.3.0. A measurement event could be a place to address the balance between signalling overhead and useful information to an eNB, by tuning the offset value for an event. For example, an event that is triggered too easily could induce too much measurement report, while an event triggered that is too hard to trigger could not provide eNB important information in time. 3GPP TS 36.331 V11.3.0 discusses the following exemplary Event A3:

### 5.5.4.4 Event A3 (Neighbour becomes offset better than PCell)

The UE shall:
1> consider the entering condition for this event to be satisfied when condition A3-1, as specified below, is fulfilled;
1> consider the leaving condition for this event to be satisfied when condition A3-2, as specified below, is fulfilled;
NOTE The cell(s) that triggers the event is on the frequency indicated in the associated *measObject* which may be different from the (primary) frequency used by the PCell.
Inequality A3-1 (Entering condition)
*Mn+Ofn+Ocn-Hys > Mp+Ofp+Ocp+Off*
Inequality A3-2 (Leaving condition)
*Mn+Ofn+Ocn+Hys < Mp+Ofp+Ocp+Off*
The variables in the formula are defined as follows:
*Mn* is the measurement result of the neighbouring cell, not taking into account any offsets.
***Ofn*** is the frequency specific offset of the frequency of the neighbour cell (i.e. *offsetFreq* as defined within *measObjectEUTRA* corresponding to the frequency of the neighbour cell).
***Ocn*** is the cell specific offset of the neighbour cell (i.e. *cellIndividualOffset* as defined within *measObjectEUTRA* corresponding to the frequency of the neighbour cell), and set to zero if not configured for the neighbour cell.
Mp is the measurement result of the PCell, not taking into account any offsets.
***Ofp*** is the frequency specific offset of the primary frequency (i.e. *offsetFreq* as defined within *measObjectEUTRA* corresponding to the primary frequency).
***Ocp*** is the cell specific offset of the PCell (i.e. *cellIndividualOffset* as defined within *measObjectEUTRA* corresponding to the primary frequency), and is set to zero if not configured for the PCell.
*Hys* is the hysteresis parameter for this event (i.e. *hysteresis* as defined within *reportConfigEUTRA* for this event).
***Off** is* the offset parameter for this event (i.e. *α3-Offset* as defined within *reportConfigEUTRA* for this event).
***Mn, Mp*** are expressed in dBm in case of RSRP, or in dB in case of RSRQ.
***Ofn**, **Ocn, Ofp**, **Ocp**, **Hys, Off*** are expressed in dB.

In certain situations, turning off cell would reduce interference and power consumption. As an example, a cell could be turned off if there is no control/data transmitted on the cell or if only certain signals for measurement purpose exist.

To turn off a cell, the UE(s) served by the cell would need to be handed over to a neighbor cell. Therefore UE may not be served by the cell with best signal quality, which means there would be a proper offset for measurement report to avoid frequent report of a turned-off cell. On the other hand, once a turned-off cell is turned on again, it would be beneficial to provide the report as soon as possible so that the offset could be modified to trigger the report easier. Therefore, the amount of signaling to modify the offset of a cell would be proportional to the state transition (such as from turn-on state to turn-off state or vice versa). If the state changes are more frequent, more signaling overhead would be needed to inform the UEs served by the cell.

In general, the concept is that UE would be able to switch between different offset for RRM (Radio Resource Management) measurement of a cell without introduce much signaling overhead. In one embodiment, the UE would determine the offset for RRM measurement of a cell implicitly according to the state of the cell, e.g., whether the cell is turned off or turned on. More specifically, more than one offsets for a cell could be configured before UE perform the determination.

In another embodiment, a plurality of offsets for a cell could be configured. A lower layer signaling would let the UE know which offset value could be applied to RRM measurement of the cell. The lower layer signaling can be a PDCCH (Physical Downlink Control Channel) or a MAC (Medium Access Control) control element.

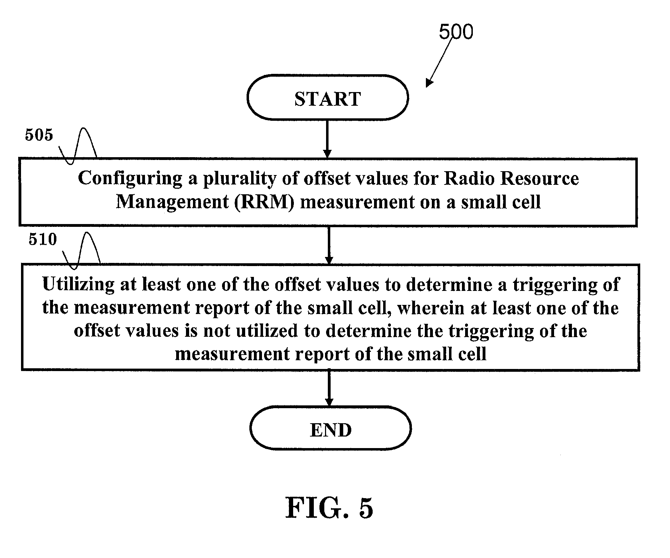

FIG. 5 is a flow chart 500 in accordance with one exemplary embodiment. Step 505 includes configuring a plurality of offset values for Radio Resource Management (RRM) measurement on a small cell. Step 510 includes utilizing at least one of the offset values to determine a triggering of the measurement report of the small cell. However, in one embodiment, one or more offset values is not utilized to determine triggering of the measurement report of the small cell. Preferably, which offset values are utilized depends on the state of the small cell. Further preferably, the state of the small cell includes at least a turn-on state and a turn-off state. Still further preferably, some of the plurality of offset values correspond to the turn-on state, and some of the plurality of offset values correspond to the turn-off state.

In the above exemplary embodiment and the preferred embodiments thereof, preferably a lower layer signaling indicates which offset values are utilized. Furthermore, the lower layer signaling could be a Medium Access Control (MAC) control element, or a Physical Downlink Control Channel (PDCCH).

Referring back to FIGs. 3 and 4, in one embodiment, the device 300 could include a program code 312 stored in memory 310 for improving small cell measurement in a wireless communication system. The CPU 308 could execute the program code 312 to enable the UE (i) to configure a plurality of offset values for Radio resource management (RRM) measurement on a small cell, and (ii) to utilize at least one of the offset values to determine a triggering of the measurement report of the small cell, wherein at least one of the offset values is not utilized to determine triggering of the measurement report of the small cell. In addition, the CPU 308 could execute the program code 312 to perform all of the above-described actions and steps or others described herein, in particular those as described in paragraphs [0036] and [0037].

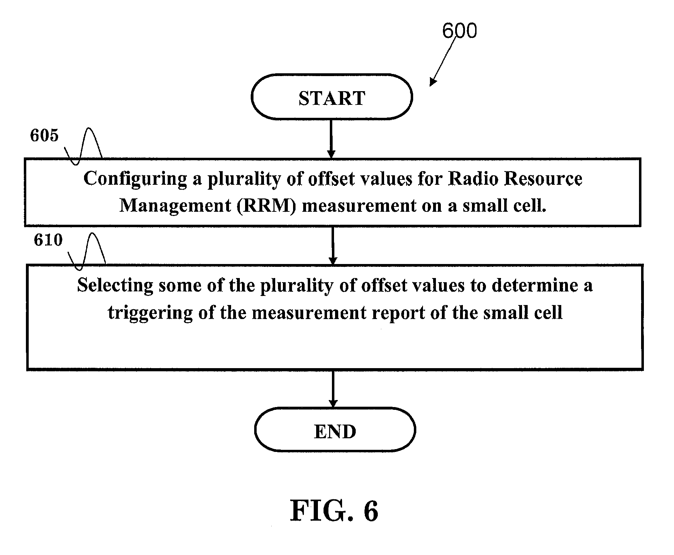

FIG. 6 is a flow chart 600 in accordance with one further exemplary embodiment. Step 605 includes configuring a plurality of offset values for Radio Resource Management (RRM) measurement on a small cell. Step 610 includes selecting some of the plurality of offset values to determine a triggering of the measurement report of the small cell. Preferably, the selection of such offset values is done based on the state of the small cell. Further preferably, the state of the small cell includes at least a turn-on state and a turn-off state.

In the above further exemplary embodiment and the preferred embodiments thereof, preferably the selection of the offset values (for determining a triggering of the measurement report of the small cell) is done based on a lower layer signaling. Furthermore, the lower layer signaling could be a Medium Access Control (MAC) control element, or a Physical Downlink Control Channel (PDCCH).

Referring back to FIGs. 3 and 4, in one embodiment, the device 300 could include a program code 312 stored in memory 310 for improving small cell measurement in a wireless communication system. The CPU 308 could execute the program code 312 to enable the UE (i) to configure a plurality of offset values for Radio Resource Management (RRM) measurement on a small cell, and (ii) to select some of the plurality of offset values to determine a triggering of the measurement report of the small cell. In addition, the CPU 308 could execute the program code 312 to perform all of the above-described actions and steps or others described herein, in particular those as described in paragraphs [0039] and [0040].

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for measuring a small cell in a wireless communication system, the method comprising:
configuring a plurality of offset values for Radio Resource Management, in the following also referred to as RRM, measurement on a small cell (505);
utilizing at least one of the offset values to determine a triggering of the measurement report of the small cell, wherein at least one of the offset values is not utilized to determine the triggering of the measurement report of the small cell (510).

2. The method of claim 1, wherein which offset values are utilized depends on the state of the small cell.

3. The method of claim 2, wherein the state of the small cell includes at least a turn-on state and a turn-off state.

4. The method of claim 3, wherein some of the plurality of offset values correspond to the turn-on state and some of the plurality of offset values correspond to the turn-off state.

5. The method of anyone of the preceding claims 1 to 4, wherein a lower layer signaling indicates which offset values are utilized.

6. The method of claim 5, wherein the lower layer signaling is a Medium Access Control, in the following also referred to as MAC, control element.

7. The method of claim 5, wherein the lower layer signaling is a Physical Downlink Control Channel, in the following also referred to as PDCCH.

8. A method for measuring a small cell in a wireless communication system, the method comprising:
configuring a plurality of offset values for Radio Resource Management, in the following also referred to as RRM, measurement on a small cell (605); and
selecting some of the plurality of offset values to determine a triggering of the measurement report of the small cell (610).

9. The method of claim 8, further comprising:
selecting some of the plurality of offset values based on the state of the small cell to determine the triggering of the measurement report of the small cell.

10. The method of claim 9, wherein the state of the small cell includes at least a turn-on state and a turn-off state.

11. The method of anyone of the preceding claims 8 to 10, further comprising:
selecting some of the plurality of offset values based on a lower layer signaling to determine the triggering of the measurement report of the small cell.

12. The method of claim 11, wherein the lower layer signaling is a Medium Access Control, in the following also referred to as MAC, control element.

13. The method of claim 11, wherein the lower layer signaling is a Physical Downlink Control Channel, in the following also referred to as PDCCH.

14. A communication device (300) for improving small cell measurement in a wireless communication system, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to improve small cell measurement in a wireless communication system by the method steps as defined in anyone of the preceding claims 8 to 13.

15. A communication device (300) for improving small cell measurement in a wireless communication system, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to improve small cell measurement in a wireless communication system by the method steps as defined in anyone of the preceding claims 1 to 7.
